# EUROPEAN PATENT APPLICATION

(11) **EP 4 726 507 A1**
(43) Date of publication of application: **15.04.2026**
(21) Application number: 24843358.3
(22) Date of filing: 27.06.2024
(51) Int. Cl.: G06F 3/01, G06F 3/00, G06V 40/20, G06F 1/16

(54) **METHOD FOR PERFORMING HAND TRACKING, AND WEARABLE ELECTRONIC DEVICE FOR SUPPORTING SAME**

(30) Priority: 20.07.2023 KR 20230094597; 17.08.2023 KR 20230107703
(71) Applicant: Samsung Electronics Co., Ltd., Suwon-si, Gyeonggi-do 16677 (KR)
(72) Inventor: KIM, Sungoh, Suwon-si, Gyeonggi-do 16677 (KR); KANG, Jinmo, Suwon-si, Gyeonggi-do 16677 (KR); KOO, Bonkon, Suwon-si, Gyeonggi-do 16677 (KR); RYU, Jisu, Suwon-si, Gyeonggi-do 16677 (KR); PARK, Sungkweon, Suwon-si, Gyeonggi-do 16677 (KR); YEOM, Donghyun, Suwon-si, Gyeonggi-do 16677 (KR)
(74) Representative: Nederlandsch Octrooibureau
(86) International application number: PCT/KR2024/009030
(87) International publication number: WO 2025/018638

(57) **Abstract**

A wearable electronic device according to one embodiment may comprise: a camera including a first camera and a second camera; a display; at least one processor; and a memory for storing instructions. When executed by the at least one processor, the instructions can cause the wearable electronic device to: acquire the location of the hand of a user on the basis of at least one first image acquired through the first camera; acquire the gaze point of the user on the basis of at least one second image acquired through the second camera; identify whether the location of the hand corresponds to the gaze point; acquire, on the basis that the location of the hand corresponds to the gaze point, a skeleton including key points related to the hand; and perform an operation related to the hand on the basis of the acquired skeleton.

## Description

### [Technical Field]

The disclosure relates to a method of performing hand tracking and a wearable electronic device supporting the same.

### [Background Art]

An increasing number of services and additional features are being offered through wearable electronic devices such as augmented reality glasses (AR glasses), virtual reality glasses (VR glasses), and head mounted display (HMD) devices. In order to increase a utility value of such a wearable electronic device and satisfy demands of various users, communication service providers or wearable electronic device manufacturers are competitively developing the wearable electronic device to provide various functions and differentiate from other companies. Accordingly, various functions that are provided through wearable electronic devices are evolving more and more.

The wearable electronic device may perform an interaction with a user through various methods. For example, the wearable electronic device may perform an operation of tracking a hand of a user (a position of the hand and/or a motion of the hand), and recognizing a gesture based on the tracked hand (and/or an operation of representing a virtual hand corresponding to the hand) (hereinafter, referred to as "hand tracking").

The above-described information may be provided as related art for the purpose of helping understanding of the disclosure. No claim or determination is made as to whether any of the foregoing is applicable as background art in relation to the disclosure.

### [Detailed Description of the Invention]

### [Technical Solution]

The hand tracking may include a plurality of operations. For example, the hand tracking may include an operation of obtaining a position of a hand in an image (or a depth map) obtained through a camera (or a sensor), an operation of obtaining a skeleton related to the hand based on the position of the hand, an operation of recognizing a gesture indicated by the hand, and/or an operation of rendering a virtual hand corresponding to the hand.

When an input causing the wearable electronic device to perform the hand tracking is input, the wearable electronic device is performing the plurality of operations included in the hand tracking. In this case, as the wearable electronic device performs the plurality of operations included in the hand tracking regardless of the interaction with the user or the intention (or interest) of the user, the wearable electronic device may consume a lot of power.

The disclosure relates to a method of performing hand tracking capable of performing the hand tracking considering a gaze point of a user (and/or a position of an object), and a wearable electronic device supporting the same.

Objects of the disclosure are not limited to the foregoing, and other unmentioned objects would be apparent to one of ordinary skill in the art from the following description.

A wearable electronic device according to an embodiment may include a camera including a first camera and a second camera, a display, at least one processor, and memory storing instructions. The instructions may, when executed by the at least one processor, cause the wearable electronic device to obtain a position of a hand of a user based on at least one first image obtained through the first camera. The instructions may, when executed by the at least one processor, cause the wearable electronic device to obtain a gaze point of the user based on at least one second image obtained through the second camera. The instructions may, when executed by the at least one processor, cause the wearable electronic device to identify whether the position of the hand corresponds to the gaze point. The instructions may, when executed by the at least one processor, cause the wearable electronic device to obtain a skeleton including key points related to the hand based on the position of the hand corresponding to the gaze point. The instructions may, when executed by the at least one processor, cause the wearable electronic device to perform an operation related to the hand based on the obtained skeleton.

A method of performing hand tracking in a wearable electronic device according to an embodiment may include obtaining a position of a hand of a user based on at least one first image obtained through a first camera of the wearable electronic device. The method may include obtaining a gaze point of the user based on at least one second image obtained through a second camera of the wearable electronic device. The method may include identifying whether the position of the hand corresponds to the gaze point. The method may include obtaining a skeleton including key points related to the hand based on the position of the hand corresponding to the gaze point. The method may include an operation of performing an operation related to the hand based on the obtained skeleton.

In an embodiment, in a non-transitory computer-readable storage medium recording computer-executable instructions, the computer-executable instructions, when executed by at least one processor of a wearable electronic device, may cause the wearable electronic device to obtain a position of a hand of a user based on at least one first image obtained through a first camera of the wearable electronic device. The computer-executable instructions may, when executed by the at least one processor, cause the wearable electronic device to obtain a gaze point of the user based on at least one second image obtained through a second camera of the wearable electronic device. The computer-executable instructions may, when executed by the at least one processor, cause the wearable electronic device to identify whether the position of the hand corresponds to the gaze point. The computer-executable instructions may, when executed by the at least one processor, cause the wearable electronic device to obtain a skeleton including key points related to the hand based on the position of the hand corresponding to the gaze point. The computer-executable instructions may, when executed by the at least one processor, cause the wearable electronic device to perform an operation related to the hand based on the obtained skeleton.

The method of performing hand tracking and the wearable electronic device supporting the same according to an embodiment of the disclosure may reduce power consumption consumed by the wearable electronic device by performing the hand tracking considering the gaze point (and/or the position of the object).

### [Brief Description of Drawings]

FIG. 1 is a block diagram illustrating an electronic device in a network environment according to an embodiment.
FIG. 2 is a perspective view illustrating an internal configuration of a wearable electronic device according to an embodiment of the disclosure.
FIG. 3A is a front view illustrating a wearable electronic device according to an embodiment.
FIG. 3B is a rear view illustrating a wearable electronic device according to an embodiment.
FIG. 4 is a block diagram illustrating a wearable electronic device according to an embodiment.
FIG. 5 is a flowchart illustrating a method of performing hand tracking according to an embodiment.
FIG. 6 is a view illustrating a method of obtaining a position of a hand of a user according to an embodiment.
FIG. 7 is a view illustrating a method of obtaining a gaze point of a user according to an embodiment.
FIG. 8 is a view illustrating an operation of obtaining a skeleton according to an embodiment.
FIG. 9 is a view illustrating an operation of rendering a virtual hand according to an embodiment.
FIG. 10 is a flowchart illustrating a method of performing hand tracking according to an embodiment.
FIG. 11 is a flowchart illustrating a method of performing hand tracking according to an embodiment.
FIG. 12 is a view illustrating a method of performing hand tracking according to an embodiment.
FIG. 13 is a flowchart illustrating a method of performing hand tracking according to an embodiment.

### [Mode for Carrying out the Invention]

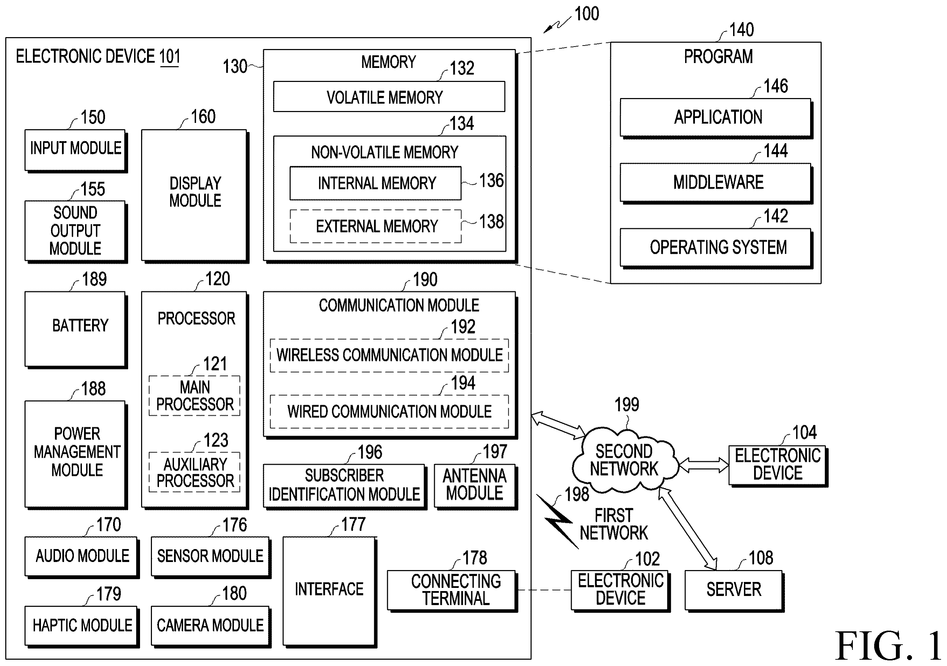

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

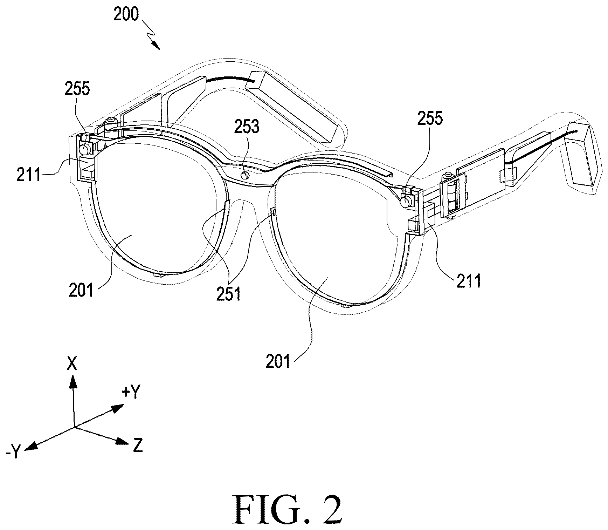

FIG. 2 is a perspective view illustrating an internal configuration of a wearable electronic device 200 according to an embodiment of the disclosure.

Referring to FIG. 2, according to an embodiment of the disclosure, a wearable electronic device 200 may include at least one of a light output module 211, a display member 201, or a camera module 250.

According to an embodiment of the disclosure, the light output module 211 may include a light source capable of outputting an image and a lens guiding the image to the display member 201. According to an embodiment of the disclosure, the light output module 211 may include at least one of a liquid crystal display (LCD), a digital mirror device (DMD), a liquid crystal on silicon (LCoS), a light emitting diode (LED on silicon (LEDoS), an organic light emitting diode (OLED), or a micro light emitting diode (micro LED).

According to an embodiment of the disclosure, the display member 201 may include an optical waveguide (e.g., a waveguide). According to an embodiment of the disclosure, the image output from the light output module 211 incident on one end of the optical waveguide may propagate inside the optical waveguide and be provided to the user. According to an embodiment of the disclosure, the optical waveguide may include at least one of at least one diffractive element (e.g., a diffractive optical element (DOE) or a holographic optical element (HOE)) or a reflective element (e.g., a reflective mirror). For example, the optical waveguide may guide the image output from the light output module 211 to the user's eyes using at least one diffractive element or reflective element.

According to an embodiment of the disclosure, the camera module 250 may capture still images and/or moving images. According to an embodiment, the camera module 250 may be disposed in a lens frame and may be disposed around the display member 201.

According to an embodiment of the disclosure, a first camera module 251 may capture and/or recognize the trajectory of the user's eye (e.g., pupil or iris) or gaze. According to an embodiment of the disclosure, the first camera module 251 may periodically or aperiodically transmit information related to the trajectory of the user's eye or gaze (e.g., trajectory information) to a processor (e.g., the processor 120 of FIG. 1).

According to an embodiment of the disclosure, a second camera module 253 may capture an external image.

According to an embodiment of the disclosure, a third camera module 255 may be used for hand detection and tracking, and recognition of the user's gesture (e.g., hand motion). According to an embodiment of the disclosure, the third camera module 255 may be used for 3 degrees of freedom (3DoF) or 6DoF head tracking, location (space, environment) recognition and/or movement recognition. The second camera module 253 may also be used for hand detection and tracking and recognition of the user's gesture. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

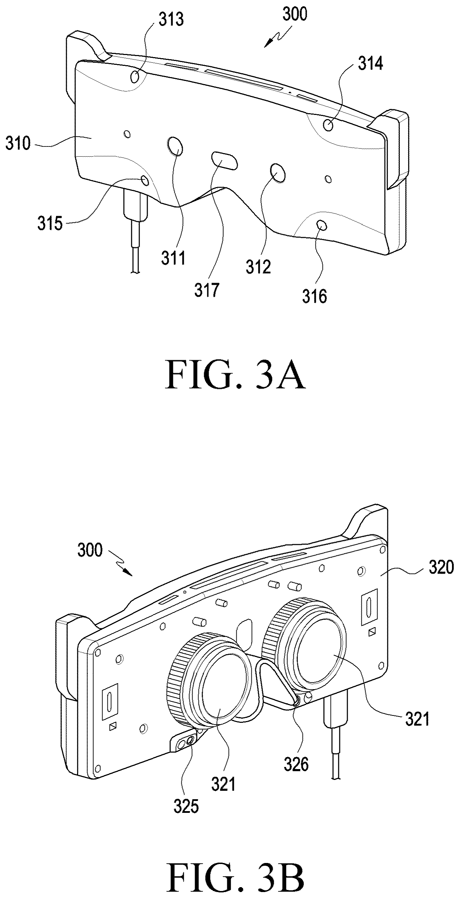

FIG. 3A is a front view illustrating a wearable electronic device 300 according to an embodiment.

FIG. 3B is a rear view illustrating a wearable electronic device 300 according to an embodiment.

Referring to FIGS. 3A and 3B, in an embodiment, camera modules 311, 312, 313, 314, 315, and 316 and/or a depth sensor 317 for obtaining information related to the ambient environment of the wearable electronic device 300 may be disposed on the first surface 310 of the housing.

In an embodiment, the camera modules 311 and 312 may obtain images related to the ambient environment of the wearable electronic device.

In an embodiment, the camera modules 313, 314, 315, and 316 may obtain images while the wearable electronic device is worn by the user. The camera modules 313, 314, 315, and 316 may be used for hand detection, tracking, and recognition of the user gesture (e.g., hand motion). The camera modules 313, 314, 315, and 316 may be used for 3DoF or 6DoF head tracking, location (space or environment) recognition, and/or movement recognition. In an embodiment, the camera modules 311 and 312 may be used for hand detection and tracking and recognition of the user's gesture.

In an embodiment, the depth sensor 317 may be configured to transmit a signal and receive a signal reflected from an object and be used for identifying the distance to the object, such as time of flight (TOF). For example, alternatively or additionally to the depth sensor 317, the camera modules 313, 314, 315, and 316 may identify the distance to the object.

According to an embodiment, camera modules 325 and 326 for face recognition and/or a display 321 (and/or lens) may be disposed on the second surface 320 of the housing.

In an embodiment, the face recognition camera modules 325 and 326 adjacent to the display may be used for recognizing the user's face or may recognize and/or track both eyes of the user.

In an embodiment, the display 321 (and/or lens) may be disposed on the second surface 320 of the wearable electronic device 300. In an embodiment, the wearable electronic device 300 may not include the camera modules 315 and 316 among the plurality of camera modules 313, 314, 315, and 316. Although not shown in FIGS. 3A and 3B, the wearable electronic device 300 may further include at least one of the components shown in FIG. 2.

As described above, according to an embodiment, the wearable electronic device 300 may have a form factor to be worn on the user's head. The wearable electronic device 300 may further include a strap and/or a wearing member to be fixed on the user's body part. The wearable electronic device 300 may provide the user experience based on augmented reality, virtual reality, and/or mixed reality while worn on the user's head.

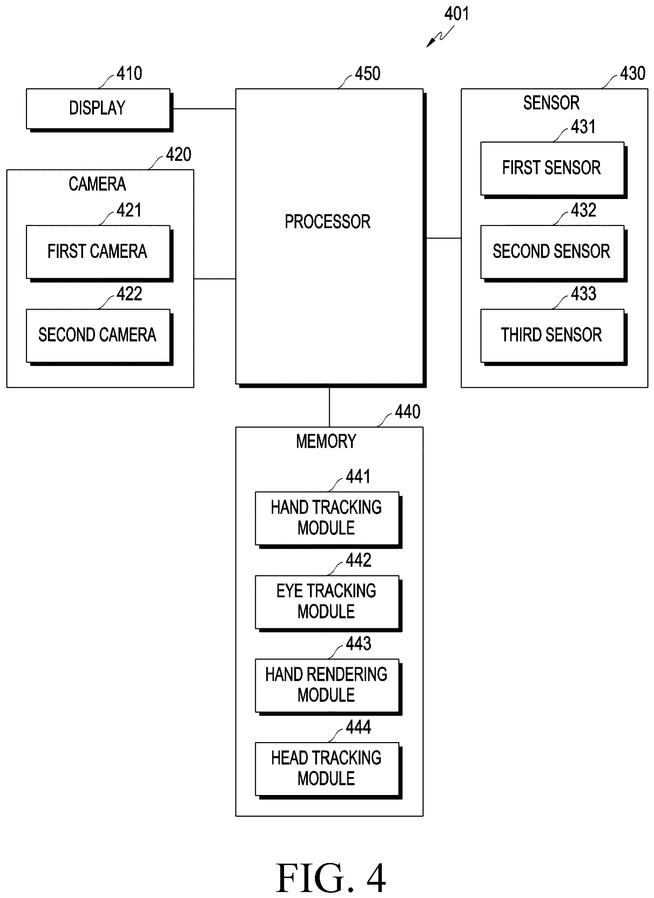

FIG. 4 is a block diagram illustrating a wearable electronic device 401 according to an embodiment.

Referring to FIG. 4, in an embodiment, the wearable electronic device 401 may be an AR glass such as the wearable electronic device 200 of FIG. 2 or a VR glass such as the wearable electronic device 300 of FIGS. 3A and 3B.

In an embodiment, the wearable electronic device 401 may include a display 410, a camera 420, a sensor 430, memory 440, and/or a processor 450.

In an embodiment, the display 410 may be the display module 160 of FIG. 1, the light output module 211 of FIG. 2, and/or the display 321 of FIGS. 3A and 3B.

In an embodiment, the camera 420 may be at least one of the camera module 180 of FIG. 1, the camera module 250 of FIG. 2, and/or the camera modules 311, 312, 313, 314, 315, 316, 325, and 326 of FIG. 3A.

In an embodiment, the camera 420 may include a first camera 421 and a second camera 422.

In an embodiment, the first camera 421 may be a camera for tracking a hand of a user. For example, based on an image obtained through the first camera 421, an operation of detecting the hand of the user, an operation of obtaining a position of the hand of the user, an operation of obtaining a skeleton related to the hand of the user, an operation of recognizing a gesture (e.g., a hand motion) of the user, and/or an operation of rendering the hand of the user may be performed. An operation of tracking the hand of the user using the first camera 421 is described below in detail.

In an embodiment, the first camera 421 may be a stereo camera. For example, the first camera 421 may be a stereo camera including a plurality of cameras (e.g., two cameras) disposed at different positions in the wearable electronic device 401 and capable of simultaneously obtaining images (e.g., two images) of an identical subject. However, the disclosure is not limited thereto, and the first camera 421 may also be one camera capable of tracking the hand of the user.

In an embodiment, the first camera 421 may be the second camera module 253 and/or the third camera module 255 of FIG. 2. In an embodiment, the first camera 421 may be one or more camera modules among the plurality of camera modules 313, 314, 315, and 316 of FIG. 3A.

In an embodiment, the second camera 422 may be a camera for obtaining a gaze point of an eye of the user (hereinafter, also referred to as "gaze point"). For example, based on an image obtained through the second camera 422, directions in which both eyes of the user are gazing (also referred to as "gaze direction") may be obtained. Based on the obtained directions and a distance between both eyes (also referred to as "binocular disparity"), the gaze point (e.g., three-dimensional coordinates where the eye of the user is gazing) may be obtained (e.g., calculated) using a triangulate method. An operation of obtaining the gaze point using the second camera 422 is described below in detail.

In an embodiment, the second camera 422 may be the first camera module 251 of FIG. 2 or the camera module 325 or 326 of FIG. 3B.

In an embodiment, the sensor 430 may include a first sensor 431, a second sensor 432, and/or a third sensor 433.

In an embodiment, the first sensor 431 may be a sensor for tracking the hand of the user. For example, the first sensor 431 may be the depth sensor 317 of FIG. 3A. For example, the first sensor 431 may obtain (e.g., sense) data for obtaining information (e.g., a depth map or a depth image) about a distance (or a depth) between the wearable electronic device 401 and the hand of the user using a time of flight (TOF) method (e.g., direct TOF (dTOF) or indirect TOF (iTOF) using light (e.g., infrared light) having a predetermined wavelength), or a structured light method. Based on the data obtained through the first sensor 431, an operation of detecting the hand of the user (e.g., whether the hand is present within a field of view illustrating the first sensor 431), an operation of obtaining a position of the hand of the user (e.g., a center position of a back of the hand or a center position of a palm of the hand), an operation of obtaining a skeleton related to the hand of the user, an operation of recognizing a gesture (e.g., a hand motion) of the user, and/or an operation of rendering the hand of the user may be performed.

In an embodiment, the second sensor 432 may be a sensor for obtaining the gaze point of the eye of the user. For example, the second sensor 432 may be a sensor capable of obtaining directions in which both eyes of the user are gazing. For example, the second sensor 432 may be a sensor that detects a pupil of the user (e.g., a center position of the pupil), and detects a direction or an amount of light such as infrared light reflected from a cornea of the eye of the user, thereby allowing a gaze direction of the user to be obtained. Based on the gaze direction obtained using the second sensor 432 and the binocular disparity, the gaze point may be obtained using a triangulation method.

In an embodiment, the third sensor 433 may be a sensor used for head tracking. For example, the third sensor 433 may be a sensor supporting 3 degrees of freedom (3DoF) (a 3-axis sensor) or a sensor supporting 6DoF (a 6-axis sensor). Based on sensor data obtained through the third sensor 433, a direction in which a head of the user is facing and/or a position of the head of the user may be obtained.

Although FIG. 4 illustrates that the sensor 430 includes the first sensor 431, the second sensor 432, and/or the third sensor 433, the disclosure is not limited thereto. For example, the sensor 430 may further include at least one component included in the sensor module 176 of FIG. 1. For example, at least one sensor included in the sensor 430 may be included in an electronic device (e.g., a wearable electronic device) external to the wearable electronic device 401. Information related to at least one of the hand, the gaze, or the head of the user may be obtained based on a sensing value obtained from the sensor included in the electronic device external to the wearable electronic device 401.

In an embodiment, the memory 440 may be the memory 130 of FIG. 1.

In an embodiment, the memory 440 may store information for performing hand tracking.

In an embodiment, the memory 440 may include a hand tracking module 441, an eye tracking module 442, a hand rendering module 443, and/or a head tracking module 444.

In an embodiment, the hand tracking module 441 may include instructions configured to cause the wearable electronic device 401 to perform hand tracking when executed by the processor 450.

In an embodiment, the eye tracking module 442 may include instructions configured to cause the wearable electronic device 401 to perform eye tracking when executed by the processor 450.

In an embodiment, the hand rendering module 443 may include instructions configured to cause the wearable electronic device 401 to generate a virtual hand (or a hand model) representing the hand of the user and display the generated virtual hand through the display 410 when executed by the processor 450.

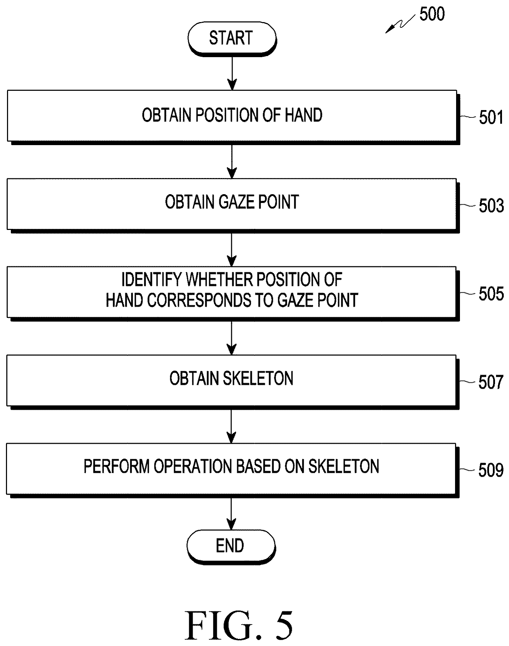

Operations performed by the hand tracking module 441, the eye tracking module 442, and the hand rendering module 443 are described below in detail with reference to FIGS. 5 to 13.

In an embodiment, the head tracking module 444 may include instructions configured to cause the wearable electronic device 401 to obtain a direction in which the wearable electronic device 401 (or a face of the user wearing the wearable electronic device 401) is facing and a position of the wearable electronic device 401 within a coordinate system of a three-dimensional space (e.g., a three-dimensional real space or a three-dimensional virtual space) when executed by the processor 450. For example, when the wearable electronic device 401 is powered on (or turned on) or when an application is executed in the wearable electronic device 401, the coordinate system of the three-dimensional space may be set based on the position and the direction of the wearable electronic device 401 obtained through the third sensor 433. After the coordinate system of the three-dimensional space is set, when the position of the wearable electronic device 401 is changed (e.g., when the position of the wearable electronic device 401 is changed by a movement of the user wearing the wearable electronic device 401) and/or when the direction of the wearable electronic device 401 is changed (e.g., when the head of the user wearing the wearable electronic device 401 is rotated), the head tracking module 444 may obtain a changed position and/or direction of the wearable electronic device 401 within the coordinate system of the three-dimensional space based on data obtained through the third sensor 433. The changed position and/or direction of the wearable electronic device 401 within the coordinate system of the three-dimensional space may be used to obtain the position of the hand of the user (e.g., three-dimensional coordinates of the hand of the user within the coordinate system of the three-dimensional space) and the gaze point (e.g., three-dimensional coordinates of a point where the user is gazing within the coordinate system of the three-dimensional space).

In an embodiment, although FIG. 4 illustrates that the memory 440 includes the hand tracking module 441, the eye tracking module 442, the hand rendering module 443, and/or the head tracking module 444, the disclosure is not limited thereto. For example, the memory 440 may further include a gesture recognition module for recognizing a gesture (e.g., a hand motion) of the user.

In an embodiment, in the above-described examples, although the hand tracking module 441, the eye tracking module 442, the hand rendering module 443, and/or the head tracking module 444 are illustrated as being included in the memory 440 as software, the disclosure is not limited thereto. At least one module among the hand tracking module 441, the eye tracking module 442, the hand rendering module 443, and/or the head tracking module 444 may be included in the wearable electronic device 401 as hardware.

In an embodiment, in FIG. 4, although the hand tracking module 441, the eye tracking module 442, the hand rendering module 443, and/or the head tracking module 444 are illustrated as independent components, the disclosure is not limited thereto. For example, at least some of the hand tracking module 441, the eye tracking module 442, the hand rendering module 443, and/or the head tracking module 444 may be implemented as an integrated module.

In an embodiment, the processor 450 may be the processor 120 of FIG. 1.

In an embodiment, the processor 450 may generally control an operation of performing hand tracking. In an embodiment, the processor 450 may include one or more processors for performing hand tracking.

Hereinafter, an operation in which the processor 450 performs hand tracking is described with reference to FIGS. 5 to 13.

Although FIG. 4 illustrates that the wearable electronic device 401 includes the display 410, the camera 420, the sensor 430, the memory 440, and/or the processor 450, the disclosure is not limited thereto.

In an embodiment, the wearable electronic device 401 may not include some of the components illustrated in FIG. 4. For example, the wearable electronic device 401 may include one of the first camera 421 and the first sensor 431 as components for performing hand tracking. For example, the wearable electronic device 401 may include one of the second camera 422 and the second sensor 432 as components for performing eye tracking.

In an embodiment, the wearable electronic device 401 may further include at least one component in addition to the components illustrated in FIG. 4. For example, the wearable electronic device 401 may further include a strap and/or a wearing member for fixing the wearable electronic device 401 on a body portion of the user (e.g., the head of the user). For example, the wearable electronic device 401 may further include at least one component (e.g., the communication module 190) included in the electronic device 101 of FIG. 1.

FIG. 5 is a flowchart 500 for describing a method of performing hand tracking according to an embodiment.

Referring to FIG. 5, in operation 501, in an embodiment, the processor 450 may obtain (e.g., calculate) a position of a hand of a user based on an image obtained through the first camera 421 (hereinafter, referred to as "first image" or "at least one first image").

In an embodiment, the processor 450 may activate the first camera 421 based on an application being executed in the wearable electronic device 401. The processor 450 may obtain a first image (e.g., at least one first image) using the activated first camera 421.

In an embodiment, the processor 450 may activate the first camera 421 based on the wearable electronic device 401 being powered on (or turned on). The processor 450 may obtain at least one first image using the activated first camera 421.

In an embodiment, the processor 450 may obtain a plurality of (e.g., two) first images through the first camera 421 (e.g., a stereo camera including a plurality of (e.g., two) cameras disposed at different positions in the wearable electronic device 401 and capable of simultaneously obtaining images (e.g., two images) of an identical subject).

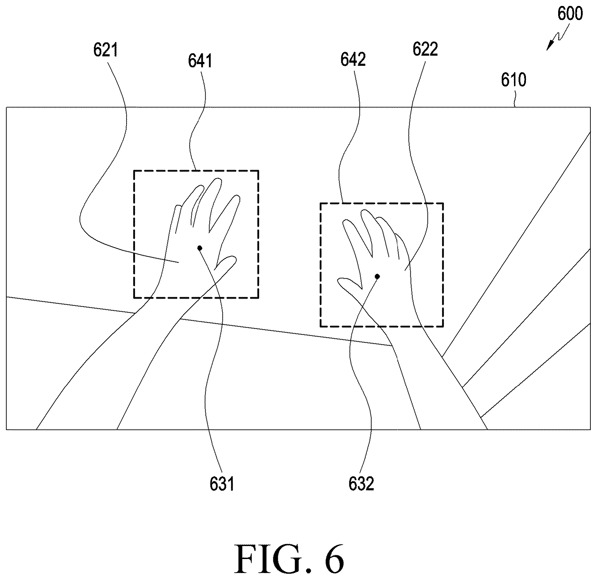

In an embodiment, the processor 450 may obtain a position of a hand of the user based on at least one first image. Hereinafter, an operation of obtaining the position of the hand of the user based on at least one first image is described with reference to FIG. 6.

FIG. 6 is a diagram 600 for describing a method of obtaining the position of the hand of the user according to an embodiment.

Referring to FIG. 6, in an embodiment, the reference numeral 610 may indicate a first image (e.g., one first image among two first images when the first camera 421 is a stereo camera).

In an embodiment, the processor 450 may detect the hand of the user (e.g., the hands 621 and 622) in the first image 610 and obtain (e.g., calculate) a position (e.g., two-dimensional coordinates) of the hand of the user.

In an embodiment, the processor 450 may detect the hand of the user in the first image 610 and obtain coordinates of the hand of the user using an artificial intelligence model. For example, the processor 450 may input the first image 610 as input data to an artificial intelligence engine using an artificial intelligence model related to hand detection. The processor 450 may obtain, from the artificial intelligence engine, an area representing the hand and a position of the hand (e.g., points 631 and 632) (e.g., a center point of a palm of the hand or a center point of a back of the hand) in the first image 610 as output data. In the above-described example, although it is illustrated that the hand of the user is detected and coordinates of the hand are obtained using the artificial intelligence model, the disclosure is not limited thereto. For example, the processor 450 may detect the hand of the user in the first image 610 and obtain coordinates of the hand of the user using an algorithm related to hand detection.

In an embodiment, the processor 450 may obtain (e.g., generate) a bounding box based on obtaining the area representing the hand and the position of the hand (e.g., the points 631 and 632) in the first image 610. For example, the processor 450 may generate a bounding box indicating a region including the area representing the hand based on the position of the hand. For example, in FIG. 6, the processor 450 may generate, in the first image 610, a bounding box 641 indicating a boundary of a region including an area representing the hand 621 with the point 631 set as a center point, and a bounding box 642 indicating a boundary of a region including an area representing the hand 622 with the point 632 set as a center point. In an embodiment, the region including the area representing the hand is not limited to a bounding box (e.g., the bounding box 641 or the bounding box 642). For example, a shape of the region including the area representing the hand may include various shapes (e.g., a circle, an ellipse, or an irregular shape) including the area representing the hand.

In an embodiment, the processor 450 may crop a region indicated by a bounding box (e.g., the bounding boxes 641 and 642) from the first image 610. The cropped region may be used in an operation of obtaining a skeleton in operation 507 to be described below.

In an embodiment, the processor 450 may obtain a three-dimensional position of the hand based on a two-dimensional position of the hand obtained from at least one first image. For example, the processor 450 may obtain two two-dimensional positions of the hand from two first images obtained through two cameras (e.g., a stereo camera). The processor 450 may obtain a three-dimensional position of the hand (e.g., three-dimensional coordinates of the hand) relative to a position and a direction of the wearable electronic device 401 (e.g., based on a current position and a current direction of the wearable electronic device 401) (e.g., a current position and a current direction of the wearable electronic device 401 obtained using the third sensor 433) based on the obtained two-dimensional positions of the hand and a position difference (e.g., a disparity) between the two cameras. The processor 450 may obtain a three-dimensional position of the hand (e.g., three-dimensional coordinates of the hand within the coordinate system of the virtual space) within a coordinate system of a virtual space (e.g., a real space) based on the current position and the current direction of the wearable electronic device 401 and the three-dimensional position of the hand relative to the position and the direction of the wearable electronic device 401.

In the above-described examples, an operation of obtaining the position of the hand using a stereo camera as the first camera 421 is described, but the disclosure is not limited thereto. For example, the processor 450 may obtain the position of the hand using the first sensor 431 (e.g., a depth sensor) in place of or in addition to the first camera 421. For example, the processor 450 may obtain depth information (e.g., a depth map or a depth image) through the first sensor 431. The processor 450 may identify whether the hand of the user is present within a field of view illustrating the first sensor 431 (e.g., whether the hand of the user is located) based on the depth information, and obtain the position of the hand (e.g., three-dimensional coordinates of the hand within the coordinate system of the virtual space).

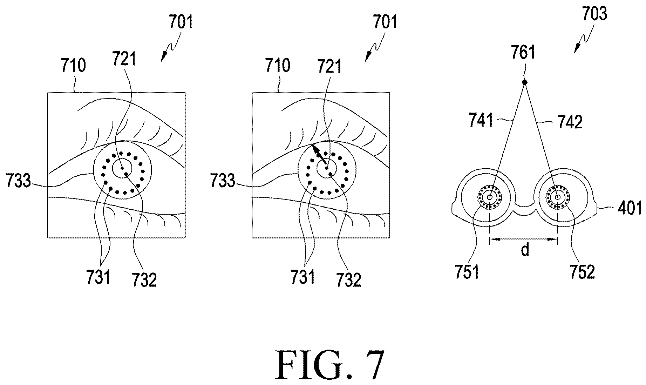

Referring back to FIG. 5, in operation 503, in an embodiment, the processor 450 may obtain a gaze point (also referred to as "point of gaze") (hereinafter, also referred to as "gaze point") of the user based on an image obtained through the second camera 422 (hereinafter, referred to as "second image" or "at least one second image"). Hereinafter, an operation of obtaining the gaze point is described with reference to FIG. 7.

FIG. 7 is a view illustrating a method of obtaining a gaze point of a user according to an embodiment.

Referring to FIG. 7, in an embodiment, a method of obtaining the gaze point described through FIG. 7 may be a pupil center corneal reflection (PCCR) method.

In an embodiment, the corneal reflection method may be used for eye tracking. For example, the corneal reflection method may be a method capable of obtaining at least one image in which a light source is reflected from a cornea and a lens portion of the eye when an infrared light source is incident on the eye of the user, and obtaining a direction of a gaze and a gaze point therethrough.

In an embodiment, the processor 450 may obtain two second images for both eyes of the user using the second camera 422 (e.g., a 2-1 camera configured to obtain a second image for a left eye and a 2-2 camera configured to obtain a second image for a right eye). In an embodiment, in reference numerals 701 and 702, the second image 710 may indicate a second image for the left eye.

In an embodiment, the processor 450 may control a light emitting unit so that light (e.g., infrared light) emitted from a light emitting unit (e.g., a light emitting diode (LED)) is incident on the eye of the user. For example, the processor 450 may control a plurality of light emitting units so that a plurality of lights emitted from each of the plurality of light emitting units are incident on the eye of the user.

In an embodiment, while the light emitting unit emits light, the processor 450 may obtain at least one second image for the eye of the user through the second camera 422.

In an embodiment, the processor 450 may obtain a position (e.g., a center point of the pupil) of the pupil and a position of a glint (e.g., a sparkle generated as light emitted from the light emitting unit is reflected by the eye of the user) in at least one second image. For example, in reference numeral 701, the processor 450 may obtain a position (e.g., a center position of the pupil 721) of the pupil 721 of the left eye 733 and positions of a plurality of glints 731 generated by a plurality of lights in the second image 710.

In an embodiment, the processor 450 may obtain a gaze direction (e.g., a two-dimensional gaze direction) of the user based on the positions of the plurality of glints 731 and the position of the pupil 721. For example, in reference numeral 702, the processor 450 may obtain a gaze vector 720 indicating (or corresponding to) a gaze direction (e.g., a two-dimensional gaze direction) of the user based on a center position 732 of the plurality of glints 731 and the position of the pupil 721.

In an embodiment, the position of the pupil 721 may be changed by a movement of the eye of the user (e.g., a change in the gaze direction of the user), whereas the positions of the plurality of glints 731 (and a center point 732 of the plurality of glints 731) may be positions (e.g., fixed positions) that are not changed even when a movement of the eye of the user occurs. Accordingly, when the movement of the eye of the user occurs, the gaze vector 720 may be changed.

In an embodiment, in FIG. 7, an operation of obtaining the gaze vector 720 for the left eye 733 has been described, but the disclosure is not limited thereto. In an embodiment, the processor 450 may obtain a gaze vector indicating a gaze direction (e.g., a two-dimensional gaze direction) of the right eye by performing operations identical or similar to the operations described with reference to FIG. 7.

In an embodiment, the processor 450 may obtain a three-dimensional gaze direction of the left eye and a three-dimensional gaze direction of the right eye based at least in part on the gaze vector of the left eye (e.g., a gaze vector indicating a two-dimensional gaze direction of the left eye) and the gaze vector of the right eye (e.g., a gaze vector indicating a two-dimensional gaze direction of the right eye).

In an embodiment, as illustrated in reference numeral 703, the processor 450 may obtain a gaze point 761 (e.g., a position where a gaze direction of the left eye and a gaze direction of the right eye converge) relative to the position and the direction of the wearable electronic device 401 using a triangulation method based on the three-dimensional gaze direction 741 of the left eye 751, the three-dimensional gaze direction 742 of the right eye 752, and a distance (binocular disparity) (d) (e.g., about 6.5 cm) between both eyes.

In an embodiment, the processor 450 may obtain the gaze point within the coordinate system of a virtual space (e.g., a real space) based on the position and the direction of the wearable electronic device 401 and the gaze point relative to the position and the direction of the wearable electronic device 401.

In an embodiment, FIG. 7 illustrates the PCCR using a plurality of light emitting units and the second camera 422, but the disclosure is not limited thereto. In an embodiment, the processor 450 may obtain the gaze point using the second sensor 432 in place of or in addition to the second camera 422. For example, the processor 450 may obtain the gaze point using the second sensor 432 including a light emitting unit including a scanning mirror controlling a direction of light (e.g., capable of changing an angle where light is directed toward the eye) and a light receiving unit receiving light. The processor 450 may control the light emitting unit to emit light whose direction is changed through the scanning mirror. While controlling the light emitting unit, the processor 450 may obtain a position (e.g., a center position of the cornea) where the light is reflected by the eye of the user at a time when an intensity (e.g., an amount) of light reflected by the eye of the user (e.g., light obtained through the light receiving unit) is maximum. The processor 450 may determine a direction connecting the obtained position and a center position of the eye of the user as the gaze direction of the user. The processor 450 may obtain the gaze point based on gaze directions of both eyes and a distance between both eyes.

However, methods of obtaining the gaze point are not limited to the above-described examples.

Referring back to FIG. 5, although FIG. 5 illustrates that the operation of obtaining the position of the hand in operation 501 is performed prior to the operation of obtaining the gaze point in operation 503, the disclosure is not limited thereto. For example, the processor 450 may perform operation 501 and operation 503 in parallel (or simultaneously). For example, the processor 450 may perform the operation of obtaining the gaze point in operation 503 when the position of the hand is obtained in operation 501 (e.g., when the hand is detected in at least one first image).

In operation 505, in an embodiment, the processor 450 may identify whether the position of the hand corresponds to the gaze point.

In an embodiment, the processor 450 may identify whether a distance between the position of the hand (e.g., the points 631 and 632 of FIG. 6) and the gaze point (e.g., the gaze point 761 of FIG. 7) is equal to or less than a designated distance. For example, the processor 450 may identify whether a distance between three-dimensional coordinates of the hand and three-dimensional coordinates of the gaze point is equal to or less than a designated distance within the coordinate system of the virtual space.

In an embodiment, a case where the position of the hand corresponds to the gaze point may be a case where the distance between the position of the hand and the gaze point is equal to or less than the designated distance. A case where the position of the hand does not correspond to the gaze point may be a case where the distance between the position of the hand and the gaze point exceeds the designated distance.

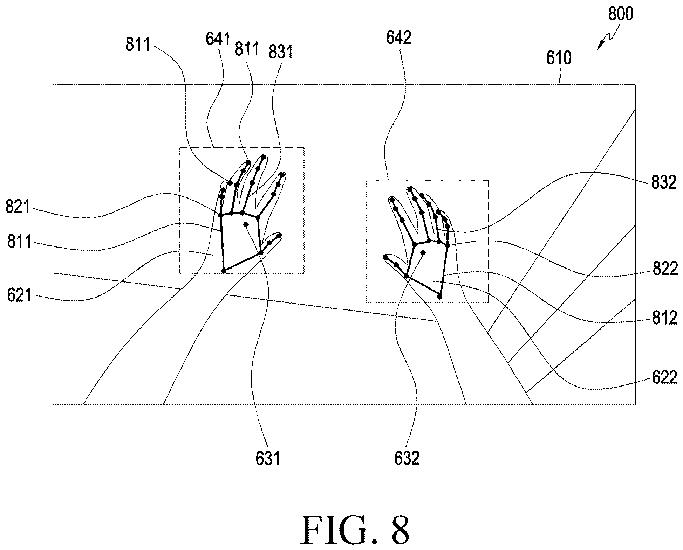

In operation 507, in an embodiment, the processor 450 may obtain a skeleton including key points related to the hand based on the position of the hand corresponding to the gaze point. The operation of obtaining the skeleton in operation 507 is described below with reference to FIG. 8.

FIG. 8 is a diagram 800 for describing an operation of obtaining a skeleton according to an embodiment.

Referring to FIG. 8, in an embodiment, a skeleton may include key points (also referred to as "feature points", "nodes", or "joints") and lines connecting the key points. For example, in FIG. 8, a skeleton 811 related to (e.g., corresponding to) the left hand 621 may include key points (e.g., the key point 821) and lines connecting the key points (e.g., the line 831), and a skeleton 812 related to the right hand may include key points (e.g., the key point 822) and lines connecting the key points (e.g., the line 832).

In an embodiment, the processor 450 may obtain a skeleton related to the hand based on an artificial intelligence model related to skeleton acquisition. For example, the processor 450 may input a region cropped from at least one first image indicated by a bounding box (e.g., the bounding boxes 641 and 642 of FIG. 6) (e.g., a region cropped from at least one first image through operation 501) as input data to an artificial intelligence engine using an artificial intelligence model related to skeleton acquisition. The processor 450 may obtain, from the artificial intelligence engine, a skeleton (e.g., the skeletons 811 and 812) including key points (e.g., two-dimensional coordinates of the key points or three-dimensional coordinates of the key points in the coordinate system of the virtual space) as output data.

In the above-described example, although it is illustrated that the skeleton related to the hand is obtained using the artificial intelligence model, the disclosure is not limited thereto. For example, the processor 450 may obtain the skeleton related to the hand using an algorithm related to skeleton acquisition. For example, the processor 450 may extract features of portions corresponding to the hand from an input image and distinguish postures of the hand in order to obtain a shape related to the hand. For example, the processor 450 may learn patterns for each portion of the hand through artificial intelligence, classify each portion of the hand and identify a posture of the hand by classifying obtained images according to each pattern. According to an embodiment, the processor 450 may discover a data set closest to a feature of the hand in an input image and output the same as a determination result by utilizing a support vector machine (SVM), which is a kind of machine learning algorithm, as a type of algorithm. Further, the processor 450 may distinguish continuous motions of the hand using a hidden Markov model (HMM) for analyzing dynamic patterns of the hand, or dynamic time warping (DTW) for not being affected by a speed or time of a specific motion, and identify a pattern.

Referring back to FIG. 5, in an embodiment, the processor 450 may not perform an operation of obtaining a skeleton including key points related to the hand based on the position of the hand not corresponding to the gaze point. For example, the processor 450 may not perform the operation of obtaining the skeleton based on the distance between the position of the hand and the gaze point exceeding the designated distance. For example, the processor 450 may continuously perform operation 501 and operation 503 without performing the operation of obtaining the skeleton based on the position of the hand not corresponding to the gaze point.

In operation 509, in an embodiment, the processor 450 may perform an operation related to the hand based on the obtained skeleton.

In an embodiment, the processor 450 may perform an operation of recognizing a gesture (e.g., a hand motion) of the user based on the obtained skeleton. For example, the processor 450 may recognize a gesture of the user (e.g., a grab gesture, a drag gesture using a finger, or a drop gesture using a finger) using an artificial intelligence model (e.g., a gesture classification model) or an algorithm related to gesture recognition based on coordinates (e.g., three-dimensional coordinates) of key points included in the skeleton. For example, the processor 450 may perform an operation of recognizing a gesture of the user based on a shape of the skeleton (or a change in the shape of the skeleton).

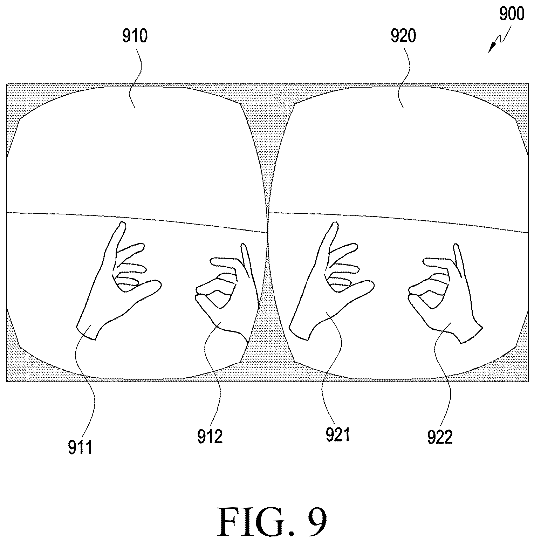

In an embodiment, the processor 450 may perform an operation of rendering the hand of the user based on the obtained skeleton. Hereinafter, an operation of rendering the hand of the user is described with reference to FIG. 9.

FIG. 9 is a diagram 900 for describing an operation of rendering a virtual hand according to an embodiment.

Referring to FIG. 9, in an embodiment, the processor 450 may generate a virtual hand corresponding to the hand based on the skeleton corresponding to the hand. For example, the processor 450 may identify a hand model for hand rendering. The processor 450 may generate a virtual hand corresponding to (e.g., mapped to) the obtained skeleton obtained through operation 507 using the hand model.

In an embodiment, the processor 450 may display the generated virtual hand at a position of the obtained skeleton (e.g., coordinates (e.g., three-dimensional coordinates) of key points included in the skeleton) through the display 410. For example, the processor 450 may display, through the display 410, a screen 910 (e.g., a screen for the left eye) including virtual hands 911 and 912 and a screen 920 (e.g., a screen for the right eye) including virtual hands 921 and 922, as illustrated in FIG. 9.

Referring back to FIG. 5, in an embodiment, the processor 450 may perform an operation of recognizing a gesture (e.g., a hand motion) of the user and an operation of rendering the hand based on the obtained skeleton. However, the operation performed by the processor 450 based on the skeleton is not limited to the operation of recognizing a gesture of the user and the operation of rendering the hand.

In an embodiment, while performing operation 507 or after performing operation 507, when the position of the hand is not obtained in at least one first image obtained through the first camera 421 (e.g., when the hand is not detected in at least one first image), the processor 450 may perform operation 501 and/or operation 503 without performing operations 505 to 507.

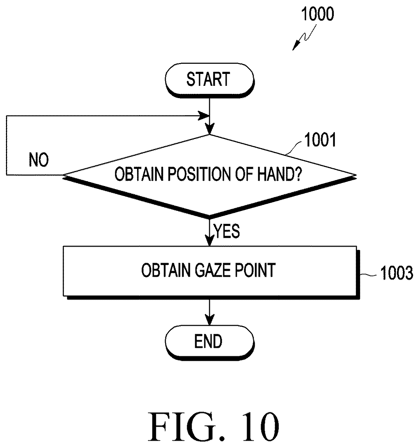

FIG. 10 is a flowchart 1000 for describing a method of performing hand tracking according to an embodiment.

In an embodiment, the operations of FIG. 10 may be operations included in operation 501 and operation 503 of FIG. 5.

Referring to FIG. 10, in operation 1001, in an embodiment, the processor 450 may identify whether a position of a hand of a user is obtained based on at least one first image obtained through the first camera 421.

In an embodiment, since operation 1001 is at least partially identical or similar to operation 501 of FIG. 5, redundant descriptions are omitted.

In an embodiment, the processor 450 may identify whether the position of the hand of the user is obtained by identifying whether the hand of the user is detected in (or from) at least one first image (e.g., whether an area corresponding to the hand of the user is present in at least one first image). For example, the processor 450 may identify that the position of the hand of the user is obtained based on the hand of the user being detected in at least one first image. For example, the processor 450 may identify that the position of the hand of the user is not obtained based on the hand of the user not being detected in at least one first image.

In an embodiment, when the position of the hand of the user is not obtained in operation 1001, the processor 450 may repeatedly (or continuously) perform operation 1001.

When the position of the hand of the user is obtained in operation 1001, in operation 1003, in an embodiment, the processor 450 may obtain a gaze point of the user based on at least one second image obtained through the second camera 422.

In an embodiment, when the position of the hand is obtained in at least one first image, the processor 450 may perform an operation of obtaining the gaze point based on at least one second image. For example, when the position of the hand is obtained in at least one first image, the processor 450 may start an operation of obtaining the gaze point based on at least one second image.

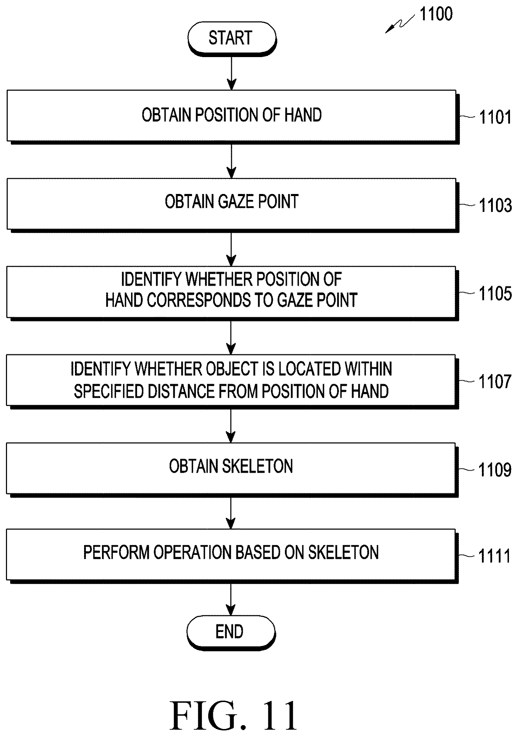

FIG. 11 is a flowchart 1100 for describing a method of performing hand tracking according to an embodiment.

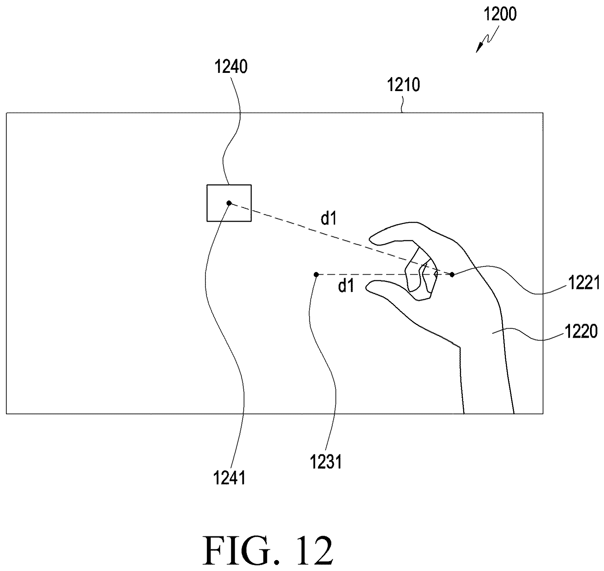

FIG. 12 is a diagram 1200 for describing a method of performing hand tracking according to an embodiment.

Referring to FIGS. 11 and 12, in operation 1101, in an embodiment, the processor 450 may obtain a position of a hand of a user based on an image obtained through the first camera 421.

In an embodiment, since operation 1101 is at least partially identical or similar to operation 501 of FIG. 5, detailed descriptions are omitted.

In operation 1103, in an embodiment, the processor 450 may obtain a gaze point of the user based on an image obtained through the second camera 422.

In an embodiment, since operation 1103 is at least partially identical or similar to operation 503 of FIG. 5, detailed descriptions are omitted.

In operation 1105, in an embodiment, the processor 450 may identify whether the position of the hand corresponds to the gaze point.

In an embodiment, since operation 1105 is at least partially identical or similar to operation 505 of FIG. 5, detailed descriptions are omitted.

In operation 1107, in an embodiment, the processor 450 may identify whether an object is located within a designated distance from the position of the hand. For example, the processor 450 may identify whether an object is located within a designated distance from the position of the hand when the position of the hand corresponds to the gaze point in operation 1105.

In an embodiment, an object (also referred to as "user interface") may be an object disposed in a virtual space set by the wearable electronic device 401 and capable of interaction with the user. For example, the object may include an icon, a widget, an image, text, and/or a window disposed in a virtual space set by the wearable electronic device 401 and executable by a user input. However, the object is not limited to the above-described examples.

In an embodiment, in FIG. 12, reference numeral 1210 may indicate a real space viewed by a user wearing the wearable electronic device 401. In an embodiment, the processor 450 may display an object 1240 (e.g., a virtual object) in the real space 1210 through the display 410.

In an embodiment, in FIG. 12, the processor 450 may identify whether a distance (d2) between a position 1221 of the hand 1220 of the user and a position 1241 of the object 1240 is equal to or less than a designated distance based on a distance (d1) between a position 1221 (e.g., a center position of a back of the hand) of the hand 1220 of the user and the gaze point 1231 being equal to or less than a designated distance.

In an embodiment, the designated distance compared with the distance (d1) between the position 1221 (e.g., the center position of the back of the hand) of the hand 1220 of the user and the gaze point 1231 may be set to be identical to or different from the distance compared with the distance (d2) between the position 1221 of the hand 1220 of the user and the position 1241 of the object 1240.

In operation 1109, in an embodiment, the processor 450 may obtain a skeleton including key points related to the hand based on the object being located within a designated distance from the position of the hand in operation 1107.

In an embodiment, the processor 450 may perform operation 1101 (and operation 1103) without performing an operation of obtaining the skeleton based on the object not being located within the designated distance from the position of the hand in operation 1107.

In an embodiment, since operation 1109 is at least partially identical or similar to operation 507 of FIG. 5, redundant descriptions are omitted.

In operation 1111, in an embodiment, the processor 450 may perform an operation based on the obtained skeleton.

In an embodiment, since operation 1111 is at least partially identical or similar to operation 509 of FIG. 5, detailed descriptions are omitted.

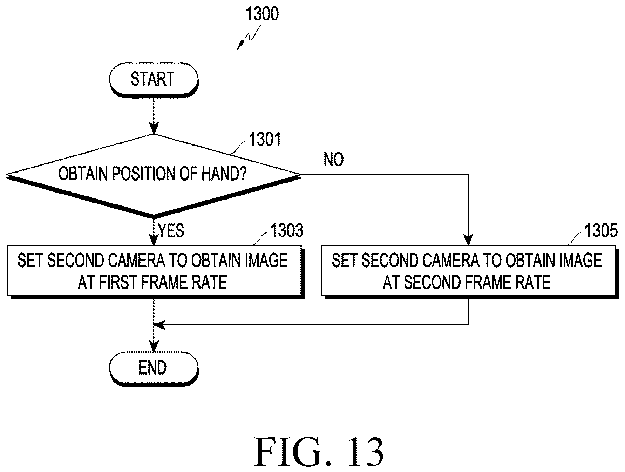

FIG. 13 is a flowchart 1300 for describing a method of performing hand tracking according to an embodiment.

In an embodiment, the operations of FIG. 13 may be operations included in operation 501 and operation 503 of FIG. 5.

Referring to FIG. 13, in operation 1301, in an embodiment, the processor 450 may identify whether a position of a hand of a user is obtained based on at least one first image obtained through the first camera 421.

In an embodiment, since operation 1301 is at least partially identical or similar to operation 501 of FIG. 5, redundant descriptions are omitted.

In an embodiment, the processor 450 may identify whether the position of the hand of the user is obtained by identifying whether the hand of the user is detected in (or from) at least one first image. For example, the processor 450 may identify that the position of the hand of the user is obtained based on the hand of the user being detected in at least one first image. For example, the processor 450 may identify that the position of the hand of the user is not obtained based on the hand of the user not being detected in at least one first image.

When the position of the hand of the user is not obtained in operation 1301, in operation 1303, in an embodiment, the processor 450 may set the second camera 422 to obtain an image (at least one second image) at a first frame rate (e.g., a first frames per second (FPS)).

In an embodiment, the processor 450 may obtain the gaze point based on at least one second image obtained at the first frame rate through the second camera 422.

When the position of the hand of the user is obtained in operation 1301, in operation 1305, in an embodiment, the processor 450 may set the second camera 422 to obtain an image (at least one second image) at a second frame rate (e.g., a second FPS) higher than the first frame rate.

In an embodiment, the processor 450 may obtain the gaze point based on at least one second image obtained at the second frame rate through the second camera 422.

In an embodiment, the processor 450 may control the second camera 422 to obtain at least one second image at the second frame rate higher than the first frame rate when the hand is detected in at least one first image, thereby allowing a more accurate (or precise) gaze point to be obtained when the hand is detected in at least one first image.

In an embodiment, the processor 450 may control the second camera 422 to obtain at least one second image at the first frame rate lower than the second frame rate when the hand is not detected in at least one first image, thereby reducing power consumed by the wearable electronic device 401 while the hand is not detected in at least one first image.

A wearable electronic device 401 according to an embodiment may include a camera 420 including a first camera 421 and a second camera 422, a display 410, at least one processor 450, and memory 440 storing instructions. The instructions may, when executed by the at least one processor 450, cause the wearable electronic device 401 to obtain a position of a hand of a user based on at least one first image obtained through the first camera 421. The instructions may, when executed by the at least one processor 450, cause the wearable electronic device 401 to obtain a gaze point of the user based on at least one second image obtained through the second camera 422. The instructions may, when executed by the at least one processor 450, cause the wearable electronic device 401 to identify whether the position of the hand corresponds to the gaze point. The instructions may, when executed by the at least one processor 450, cause the wearable electronic device 401 to obtain a skeleton including key points related to the hand based on the position of the hand corresponding to the gaze point. The instructions may, when executed by the at least one processor 450, cause the wearable electronic device 401 to perform an operation related to the hand based on the obtained skeleton.

In an embodiment, the instructions may, when executed by the at least one processor 450, cause the wearable electronic device 401 to obtain an area representing the hand and the position of the hand in the at least one first image. The instructions may, when executed by the at least one processor 450, cause the wearable electronic device 401 to obtain a bounding box indicating a region including the area representing the hand based on the position of the hand.

In an embodiment, the instructions may, when executed by the at least one processor 450, cause the wearable electronic device 401 to perform the obtaining of the gaze point of the user based on the position of the hand being obtained.

In an embodiment, the instructions may, when executed by the at least one processor 450, cause the wearable electronic device 401 to obtain a position of a pupil of the user in the at least one second image. The instructions may, when executed by the at least one processor 450, cause the wearable electronic device 401 to obtain, in the at least one second image, positions of glints which are displayed in the at least one second image as light emitted from a plurality of light emitting units of the electronic device is reflected by an eye of the user. The instructions may, when executed by the at least one processor 450, cause the wearable electronic device 401 to obtain the gaze point of the user based on the position of the pupil and a center position of the glints obtained based on the positions of the glints.

In an embodiment, the instructions may, when executed by the at least one processor 450, cause the wearable electronic device 401 to identify whether a distance between the position of the hand and the gaze point is equal to or less than a specified distance.

In an embodiment, the instructions may, when executed by the at least one processor 450, cause the wearable electronic device 401 to perform the obtaining of the skeleton based on the distance between the position of the hand and the gaze point being equal to or less than the specified distance. Based on the distance between the position of the hand and the gaze point exceeding the specified distance, the obtaining of the skeleton may not be performed.

In an embodiment, the instructions may, when executed by the at least one processor 450, cause the wearable electronic device 401 to recognize a gesture indicated by a motion of the hand of the user based on the obtained skeleton.

In an embodiment, the instructions may, when executed by the at least one processor 450, cause the wearable electronic device 401 to display, through the display 410, a virtual hand corresponding to the hand of the user based on the obtained skeleton.

In an embodiment, the instructions may, when executed by the at least one processor 450, cause the wearable electronic device 401 to identify whether an object is located within a specified distance from the position of the hand based on the position of the hand corresponding to the gaze point. The instructions may, when executed by the at least one processor 450, cause the wearable electronic device 401 to obtain the skeleton based on the object being located within the specified distance from the position of the hand.

In an embodiment, the instructions may, when executed by the at least one processor 450, cause the wearable electronic device 401 to control the second camera 422 to obtain the at least one second image at a first frame rate based on the position of the hand of the user not being obtained. The instructions may, when executed by the at least one processor 450, cause the wearable electronic device 401 to obtain the at least one second image at a second frame rate higher than the first frame rate through the second camera 422 based on the position of the hand of the user being obtained.

A method of performing hand tracking in a wearable electronic device 401 according to an embodiment may include obtaining a position of a hand of a user based on at least one first image obtained through a first camera 421 of the wearable electronic device 401. The method may include obtaining a gaze point of the user based on at least one second image obtained through a second camera 422 of the wearable electronic device 401. The method may include identifying whether the position of the hand corresponds to the gaze point. The method may include obtaining a skeleton including key points related to the hand based on the position of the hand corresponding to the gaze point. The method may include performing an operation related to the hand based on the obtained skeleton.

In an embodiment, the obtaining of the position of the hand of the user may include obtaining an area representing the hand and the position of the hand in the at least one first image. The obtaining of the position of the hand of the user may include obtaining a bounding box indicating a region including the area representing the hand based on the position of the hand.

In an embodiment, the obtaining of the gaze point of the user may include performing the obtaining of the gaze point of the user based on the position of the hand being obtained.

In an embodiment, the obtaining the gaze point of the user may include obtaining a position of a pupil of the user in the at least one second image. The obtaining of the gaze point of the user may include obtaining, in the at least one second image, positions of glints which are displayed in the at least one second image as light emitted from a plurality of light emitting units of the electronic device is reflected by an eye of the user. The obtaining of the gaze point of the user may include obtaining the gaze point of the user based on the position of the pupil and a center position of the glints obtained based on the positions of the glints.

In an embodiment, the identifying of whether the position of the hand corresponds to the gaze point may include identifying whether a distance between the position of the hand and the gaze point is equal to or less than a specified distance.

In an embodiment, the obtaining of the skeleton may include performing obtaining the skeleton based on the distance between the position of the hand and the gaze point being equal to or less than the specified distance. Based on the distance between the position of the hand and the gaze point exceeding the specified distance, the obtaining of the skeleton may not be performed.

In an embodiment, the performing of the operation related to the hand may include recognizing a gesture indicated by a motion of the hand of the user based on the obtained skeleton.

In an embodiment, the performing of the operation related to the hand may include displaying, through a display 410 of the wearable electronic device 401, a virtual hand corresponding to the hand of the user based on the obtained skeleton.

In an embodiment, the performing of the operation related to the hand may include identifying whether an object is located within a specified distance from the position of the hand based on the position of the hand corresponding to the gaze point. The performing of the operation related to the hand may include obtaining the skeleton based on the object being located within the specified distance from the position of the hand.

In an embodiment, the method may further include controlling the second camera 422 to obtain the at least one second image at a first frame rate based on the position of the hand of the user not being obtained. The method may further include controlling the second camera 422 to obtain the at least one second image at a second frame rate higher than the first frame rate based on the position of the hand of the user being obtained.

In an embodiment, in a non-transitory computer-readable storage medium recording computer-executable instructions, the computer-executable instructions may, when executed by at least one processor 450 of a wearable electronic device 401, cause the wearable electronic device 401 to obtain a position of a hand of a user based on at least one first image obtained through a first camera 421 of the wearable electronic device 401. The computer-executable instructions may, when executed by at least one processor 450 of a wearable electronic device 401, cause the wearable electronic device 401 to obtain a gaze point of the user based on at least one second image obtained through a second camera 422 of the wearable electronic device 401. The computer-executable instructions may, when executed by at least one processor 450 of a wearable electronic device 401, cause the wearable electronic device 401 to identify whether the position of the hand corresponds to the gaze point. The computer-executable instructions may, when executed by at least one processor 450 of a wearable electronic device 401, cause the wearable electronic device 401 to obtain a skeleton including key points related to the hand based on the position of the hand corresponding to the gaze point. The computer-executable instructions may, when executed by at least one processor 450 of a wearable electronic device 401, cause the wearable electronic device 401 to perform an operation related to the hand based on the obtained skeleton.

Further, the structure of the data used in embodiments of the disclosure may be recorded in a computer-readable recording medium via various means. The computer-readable recording medium includes a storage medium, such as a magnetic storage medium (e.g., a ROM, a floppy disc, or a hard disc) or an optical reading medium (e.g., a CD-ROM or a DVD).

## Claims

1. A wearable electronic device (401) comprising:
a camera (420) including a first camera (421) and a second camera (422);
a display (410);
at least one processor (450); and
memory (440) storing instructions that, when executed by the at least one processor (450), cause the wearable electronic device (401) to:
obtain a position of a hand of a user, based on at least one first image obtained through the first camera (421),
obtain a gaze point of the user, based on at least one second image obtained through the second camera (422),
identify whether the position of the hand corresponds to the gaze point,
based on the position of the hand corresponding to the gaze point, obtain a skeleton including key points related to the hand, and
based on the obtained skeleton, perform an operation related to the hand.

2. The wearable electronic device (401) of claim 1, wherein the instructions, when executed by the at least one processor (450), cause the wearable electronic device (401) to:
obtain an area representing the hand and the position of the hand in the at least one first image, and
obtain a bounding box indicating a region including the area representing the hand based on the position of the hand.

3. The wearable electronic device (401) of claim 1 or 2, wherein the instructions, when executed by the at least one processor (450), cause the wearable electronic device (401) to:
based on obtaining the position of the hand, perform the obtaining of the gaze point of the user.

4. The wearable electronic device (401) of any one of claims 1 to 3, wherein the instructions, when executed by the at least one processor (450), cause the wearable electronic device (401) to:
obtain a position of a pupil of the user in the at least one second image,
obtain, in the at least one second image, positions of glints which are displayed in the at least one second image as light emitted from a plurality of light emitting units of the wearable electronic device (401) is reflected by an eye of the user, and
obtain the gaze point of the user, based on the position of the pupil and a center position of the glints obtained based on the positions of the glints.

5. The wearable electronic device (401) of any one of claims 1 to 4, wherein the instructions, when executed by the at least one processor (450), cause the wearable electronic device (401) to:
identify whether a distance between the position of the hand and the gaze point is equal to or less than a specified distance.

6. The wearable electronic device (401) of any one of claims 1 to 5, wherein the instructions, when executed by the at least one processor (450), cause the wearable electronic device (401) to:
based on the distance between the position of the hand and the gaze point being equal to or less than the specified distance, perform the obtaining of the skeleton,
wherein based on the distance between the position of the hand and the gaze point being greater than the specified distance, the obtaining of the skeleton is not performed.

7. The wearable electronic device (401) of any one of claims 1 to 6, wherein the instructions, when executed by the at least one processor (450), cause the wearable electronic device (401) to:
based on the obtained skeleton, recognize a gesture that the motion of the hand of the user indicates.

8. The wearable electronic device (401) of any one of claims 1 to 7, wherein the instructions, when executed by the at least one processor (450), cause the wearable electronic device (401) to:
based on the obtained skeleton, display, through the display (410), a virtual hand corresponding to the hand of the user.

9. The wearable electronic device (401) of any one of claims 1 to 8, wherein the instructions, when executed by the at least one processor (450), cause the wearable electronic device (401) to:
based on the position of the hand corresponding to the gaze point, identify whether an object is located within a specified distance from the position of the hand, and
based on the object being located within the specified distance from the position of the hand, obtain the skeleton.

10. The wearable electronic device (401) of any one of claims 1 to 9, wherein the instructions, when executed by the at least one processor (450), cause the wearable electronic device (401) to:
based on the position of the hand being not obtained, control the second camera (422) to obtain the at least one second image at a first frame rate, and
based on the position of the hand being obtained, control the second camera (422) to obtain the at least one second image at a second frame rate higher than the first frame rate.

11. A method of performing hand tracking in a wearable electronic device (401), the method comprising:
obtaining a position of a hand of a user, based on at least one first image obtained through a first camera (421) of the wearable electronic device (401);
obtaining a gaze point of the user, based on at least one second image obtained through a second camera (422) of the wearable electronic device (401);
identifying whether the position of the hand corresponds to the gaze point;
based on the position of the hand corresponding to the gaze point, obtaining a skeleton including key points related to the hand; and
based on the obtained skeleton, performing an operation related to the hand.

12. The method of claim 11, wherein the obtaining of the position of the hand of the user comprises:
obtaining an area representing the hand and the position of the hand in the at least one first image; and
obtaining a bounding box indicating a region including the area representing the hand based on the position of the hand.

13. The method of claim 11 or 12, wherein obtaining the gaze point of the user comprises:
based on obtaining the position of the hand, performing an operation of obtaining the gaze point of the user.

14. The method of any one of claims 11 to 13, wherein obtaining the gaze point of the user comprises:
obtaining a position of a pupil of the user in the at least one second image;
obtaining, in the at least one second image, positions of glints which are displayed in the at least one second image as light emitted from a plurality of light emitting units of the wearable electronic device (401) is reflected by an eye of the user; and
obtaining the gaze point of the user, based on the position of the pupil and a center position of the glints obtained based on the positions of the glints.

15. A non-transitory computer-readable storage medium recording computer-executable instructions, wherein the computer-executable instructions, when executed by at least one processor (450) of a wearable electronic device (401), cause the wearable electronic device (401) to:
obtain a position of a hand of a user, based on at least one first image obtained through a first camera (421) of the wearable electronic device (401);
obtain a gaze point of the user, based on at least one second image obtained through a second camera (422) of the wearable electronic device (401);
identify whether the position of the hand corresponds to the gaze point;
based on the position of the hand corresponding to the gaze point, obtain a skeleton including key points related to the hand; and
based on the obtained skeleton, perform an operation related to the hand.
